# FASCICULE DE BREVET EUROPEEN

(11) **EP 1 611 824 B1**
(45) Date de publication et mention de la délivrance du brevet: **07.10.2009**
(21) Numéro de dépôt: 05291139.3
(22) Date de dépôt: 27.05.2005
(51) Int. Cl.: A47J 27/08

(54) **Autocuiseur avec couvercle à mâchoires mobiles**
Schnellkochtopf mit Deckel mit mobilen Backen
Pressure cooker with lid having movable jaws

(30) Priorité: 29.06.2004 FR 0407173
(43) Date de publication de la demande: 04.01.2006
(73) Titulaire: Société Industrielle de Transformation de Métaux - SITRAM, 36170 Saint-Benoit-du-Sault (FR)
(72) Inventeur: Angue, Laurian, 36000 Châteauroux (FR)
(74) Mandataire: Parzy, Benjamin Alain

(56) Documents cités:
- EP-A- 0 691 096
- DE-A- 3 933 828
- GB-A- 546 931

## Description

### ARRIERE-PLAN DE L'INVENTION

On connaît, par exemple du document EP 0 691 096, des autocuiseurs comportant une cuve et un couvercle amovible comportant deux mâchoires montées mobiles entre une position de verrouillage sur la cuve et une position de déverrouillage, les mâchoires étant solidaires de coulisseaux montés pour coulisser sur le couvercle parallèlement l'un à l'autre.

Sur le couvercle de l'autocuiseur précité, une poignée entraîne une barrette centrale formant vilebrequin qui est montée à rotation sur le couvercle et reliée aux coulisseaux par des bielles, de sorte qu'une rotation de la poignée provoque un mouvement en sens opposé des mâchoires.

Ce mécanisme d'actionnement des mâchoires comporte de nombreuses articulations, ce qui le rend complexe à fabriquer et assembler.

On connaît par ailleurs du document EP 1 139 828 un autocuiseur comportant une seule mâchoire mobile reliée à un coulisseau monté pour coulisser sur le couvercle. Le coulisseau comporte une extrémité dentée formant crémaillère qui coopère avec un secteur denté d'une poignée montée tournante sur le couvercle selon un axe horizontal en service.

### OBJET DE L'INVENTION

L'invention a pour objet un autocuiseur avec couvercle à au moins deux mâchoires mobiles, à mécanisme d'actionnement particulièrement simple.

### BREVE DESCRIPTION DE L'INVENTION

En vue de la réalisation de ce but, on propose un autocuiseur comportant une cuve et un couvercle amovible comportant au moins deux mâchoires montées mobiles sur le couvercle entre une position de verrouillage du couvercle sur la cuve et une position de déverrouillage, chaque mâchoire étant reliée à un coulisseau monté coulissant sur le couvercle de sorte qu'un coulissement du coulisseau provoque un mouvement de la mâchoire associée vers l'une desdites positions, dans lequel, selon l'invention, un pignon est monté tournant sur le couvercle selon un axe vertical en service, chaque coulisseau ayant une portion dentée formant crémaillère qui coopère avec ledit pignon de sorte qu'une rotation du pignon provoque un mouvement simultané de toutes les mâchoires vers l'une desdites positions.

Ainsi, le système à crémaillères connu en soi pour l'actionnement d'une unique mâchoire a été modifié selon l'invention pour autoriser la manoeuvre simultanée d'au moins deux mâchoires. La disposition du pignon monté rotatif selon un axe vertical rend sa surface latérale accessible de tous côtés, permettant la coopération du pignon avec plusieurs crémaillères. Le mécanisme d'actionnement de l'invention est bien plus simple que le mécanisme à vilebrequin et bielles de l'art antérieur.

### BREVE DESCRIPTION DES DESSINS

L'invention sera mieux comprise à la lumière de la description qui suit en référence aux figures des dessins annexés parmi lesquelles :
- la figure 1 est une vue en perspective d'un autocuiseur muni d'un couvercle selon un premier mode de réalisation particulier de l'invention;
- la figure 2 est une vue en perspective du couvercle de la figure 1, sur laquelle le capot de protection du mécanisme d'actionnement a été omis ;
- la figure 3 est une vue du couvercle en coupe selon la ligne III-III de la figure 1 ;
- la figure 4 est une vue en coupe partielle selon la ligne IV-IV de la figure 3 ;
- la figure 5 est une vue en coupe partielle selon la ligne V-V de la figure 3 ;
- la figure 6 est une vue de dessous de la poignée de manoeuvre du mécanisme d'actionnement ;
- la figure 7 est une vue de dessus partielle d'un couvercle selon un deuxième mode particulier de réalisation de l'invention ;
- la figure 8 est une vue en coupe partielle d'un couvercle selon un troisième mode particulier de réalisation de l'invention.

### DESCRIPTION DETAILLEE DE L'INVENTION

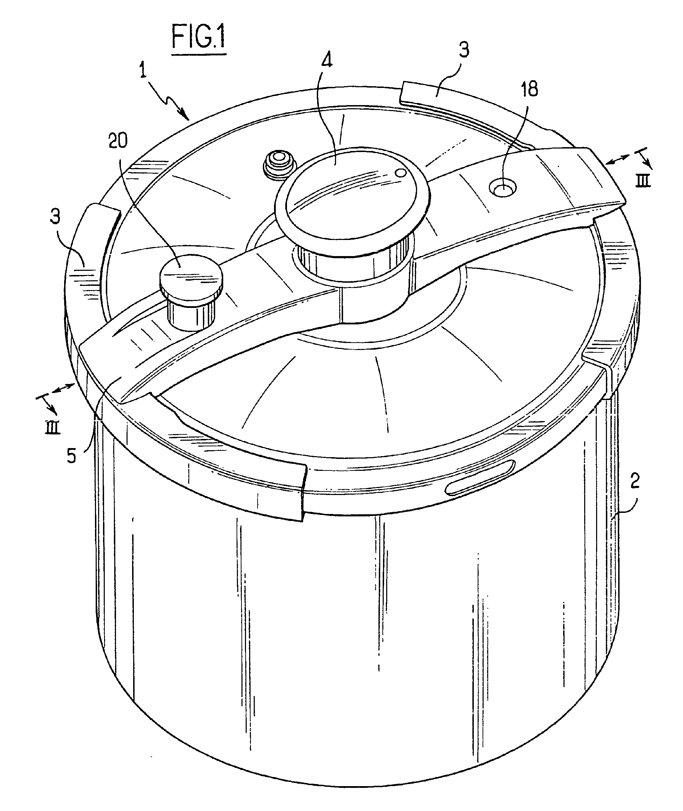

En référence à la figure 1, le couvercle 1 de l'invention est destiné à fermer une cuve 2 d'autocuiseur. Pour ce faire, et selon un premier mode particulier de réalisation de l'invention, le couvercle 1 comporte deux mâchoires 3 mobiles radialement (comme indiqué par les flèches) entre une position de verrouillage sur la cuve 2, telle qu'illustrée, dans laquelle les mâchoires sont engagées sur un bord de la cuve, et une position de déverrouillage dans laquelle les mâchoires sont écartées de la cuve 2.

Le couvercle 1 comporte une poignée de manoeuvre 4 montée à pivotement selon un axe Z vertical en service, coïncidant ici avec un axe de symétrie de révolution du couvercle. La poignée de manoeuvre 4 est associée à un mécanisme d'actionnement des mâchoires 3 caché par un capot 5.

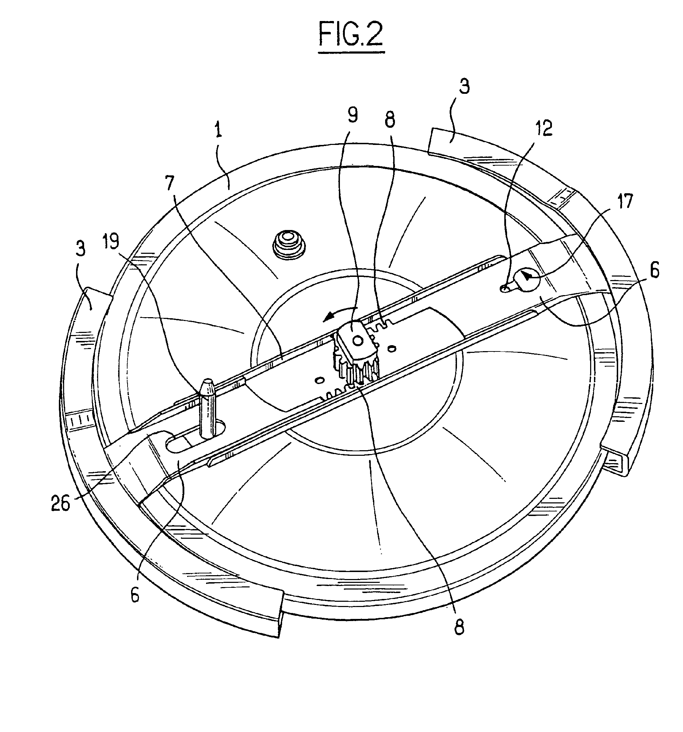

Comme cela est visible à la figure 2 où le capot 5 a été omis, les mâchoires 2 sont solidaires de coulisseaux 6 montés coulissants dans une glissière 7 rapportée sur le couvercle 1.

Les coulisseaux 6 ont des extrémités 8 présentant des dents formant des crémaillères. Lesdites extrémités 8 s'étendent de part et d'autre d'un pignon 9 monté à rotation selon l'axe Z sur un fond de la glissière 7. Le pignon 9 coopère avec les extrémités 8 des coulisseaux 6 de sorte d'une rotation du pignon 9 provoque un déplacement en sens opposés des mâchoires 3. La poignée de manoeuvre 4 non représentée ici est bien sûr solidaire du pignon 9.

Sur la figure 2, les mâchoires 3 sont représentés en position de déverrouillage. Une rotation du pignon 9 d'un quart de tour comme indiqué par la flèche suffit à ramener les mâchoires 3 en position de verrouillage.

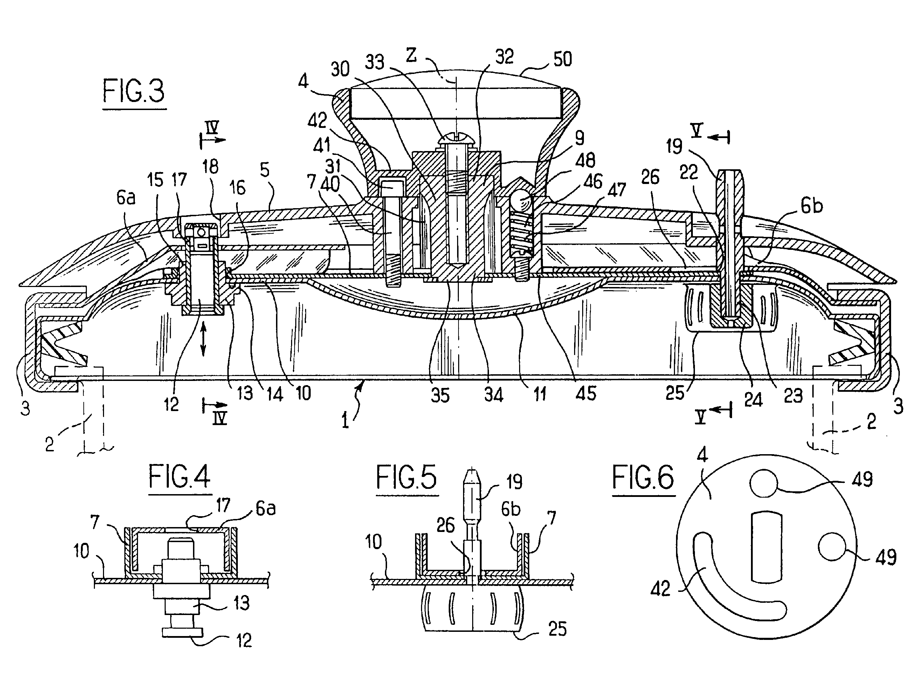

Comme cela est visible à la figure 3, le couvercle 1 comporte une paroi 10 emboutie pour présenter un creux central 11, la glissière 7 s'étendant sur la paroi 10 de part et d'autre du creux central 11.

Le couvercle 1 comporte un indicateur de pression 12 monté coulissant dans un guide 13 qui s'étend au travers de la paroi 10 du couvercle 1 et du fond de la glissière 7. Le guide 13 comporte un épaulement 14 et une partie filetée 15 engagée dans un orifice taraudé 16 du fond de la glissière 7, de sorte que la paroi 10 du couvercle est pincée entre l'épaulement 14 et la glissière 7.

Le coulisseau 6 qui s'étend du côté de l'indicateur de pression 12 (ci-après désigné 6a) comporte un orifice 17 qui est aligné avec l'indicateur de pression 12 uniquement lorsque la mâchoire associée est en position de verrouillage.

L'orifice 17 est clairement visible à la figure 2, sur laquelle on aperçoit l'extrémité de l'indicateur de pression 12. Sur cette figure, l'orifice 17 n'est pas aligné avec l'indicateur de pression 12 puisque les mâchoires sont en position déverrouillées.

Un orifice 18 ménagé dans le capot 4 en regard de l'indicateur de pression 12 permet d'apercevoir celui-ci de l'extérieur. Si l'extrémité de l'indicateur de pression 12 est visible au travers de l'orifice 18, c'est que l'orifice 17 du coulisseau 6a est aligné avec l'indicateur de pression 12, et donc que les mâchoires sont en position de verrouillage.

Sous l'effet de la pression régnant dans la cuve (qui ne peut s'instaurer que si les mâchoires sont en position de verrouillage), l'indicateur de pression 12 est déplacé vers une position haute (illustrée ici) dans laquelle il s'étend au travers de l'orifice 17 du coulisseau 6a, bloquant le mécanisme d'actionnement des mâchoires et empêchant l'ouverture du couvercle alors que la cuve est sous pression. L'indicateur de pression 12 remplit donc également une fonction de blocage du mécanisme d'actionnement en position de verrouillage. On remarquera à cet égard que l'indicateur de pression ne coopère qu'avec l'un des coulisseaux, ce qui suffit pour bloquer l'ensemble du mécanisme d'actionnement.

A la figure 4, on constate que le coulisseau 6a coopérant avec l'indicateur de pression 12 a une section en U inversé. Les flancs du U coopèrent avec la glissière 7 pour assurer un guidage du coulisseau 6a, tandis que l'âme centrale du coulisseau est surélevée par rapport au fond de la glissière 7 de sorte que lorsque l'indicateur de pression 12 est en position de repos comme illustré ici, le coulisseau 6a est libre de coulisser.

Le couvercle 1 comporte par ailleurs un conduit d'échappement 19 qui s'étend également au travers de la paroi 10 du couvercle 1 et du fond de la glissière 7. Le conduit d'échappement 19 comporte un épaulement 22 et une partie filetée 23 qui reçoit un écrou 24 (muni d'une crépine 25) de sorte que la paroi 10 et le fond de la glissière 7 sont pincés ensemble entre l'épaulement 22 et l'écrou 24. Le conduit d'échappement 19 est destiné à recevoir une soupape de régulation à pointeau 20, visible à la figure 1, permettant de maintenir la pression régnant dans la cuve à un seuil prédéterminé.

Pour permettre le libre déplacement du coulisseau 6 adjacent (ci-après désigné 6b), ce dernier comporte une lumière oblongue 26 au travers de laquelle s'étend le conduit d'échappement 19. La lumière 26 est clairement visible à la figure 2. A la figure 5, on constate que le coulisseau 6b a une section en U avec des flancs coopérant avec la glissière 7 pour assurer le guidage du coulisseau 6b.

Selon un aspect particulier de l'invention, le pignon 9 comporte un noyau 30 sur lequel des dents 31 sont formées. Le noyau 30 comporte une partie supérieure 32 présentant deux méplats (clairement visibles à la figure 2). Cette partie supérieure 32 est engagée dans une cavité homologue de la poignée 4 avec laquelle elle coopère pour réaliser une immobilisation angulaire de la poignée 4 vis à vis du pignon 9. Une vis 33 maintient la poignée 4 sur le pignon 9.

Le noyau 30 comporte une partie inférieure 34 circulaire qui s'étend dans un orifice central de la glissière 7. Une rondelle 35 est soudée à ladite partie inférieure 34 de sorte que la glissière 7 est prisonnière entre le flanc inférieur des dents 31 et la rondelle 35. Le pignon 9 est ainsi lié à la glissière 7 tout en étant mobile en rotation.

On notera que la rondelle 35 s'étend sous la glissière 7 au droit du creux 11 de la paroi 10 du couvercle 1, de sorte que la rondelle 35 ne gêne pas le montage de la glissière 7 sur le couvercle 1.

Selon un autre aspect de l'invention, le capot 5 est lié à la glissière 7 par l'intermédiaire d'une première vis de fixation 40 ayant une tête 41 qui s'étend en saillie d'une face supérieure du capot 5. Ladite tête 41 forme un téton engagé dans une gorge annulaire 42 de la poignée 4 plus clairement visible à la figure 6. La gorge annulaire 42 a une extension angulaire de 90 degrés, de sorte que la coopération de la tête 41 et la gorge annulaire 42, limite la rotation de la poignée 4, donc du pignon 9, à un quart de tour.

Selon encore un autre aspect de l'invention, le capot 5 est lié à la glissière 7 par une deuxième vis de fixation 45 s'étendant au fond d'un logement 46 ménagé dans le capot 5. Ce logement reçoit un ressort 47 et une bille 48. La bille est ainsi pressée contre la face inférieure de la poignée 4 pour être sélectivement engagée dans l'une des deux empreintes 49 ménagées sur ladite face inférieure, visibles à la figure 6. La bille 48 réalise une indexation de la poignée dans deux positions angulaires correspondant respectivement aux positions de verrouillage et de déverrouillage des mâchoires.

Ainsi, on utilise les organes de fixation du capot 5 sur la glissière 7 (tête de l'une des vis, logement de l'autre vis) pour assurer également les fonctions de limitation de course angulaire et d'indexation en position de la poignée de manoeuvre 4.

Lesdits organes de fixation sont cachés par la poignée 4, favorisant l'esthétique du couvercle. Pour accéder auxdits organes de fixation, il faut dévisser la vis 33 de maintien de la poignée 4 sur le pignon 9, en retirant un cabochon 50 de la poignée 4 qui cache ladite vis. On notera que les vis de fixation 40,45 dépassent légèrement sous la glissière 7 au droit du creux 11 de la paroi 10 du couvercle 1, de sorte que ce dépassement n'est pas gênant pour le montage de la glissière 7 sur le couvercle 1.

On notera également que dans le mode de réalisation illustré ici, la glissière 7 est le seul élément de tout le mécanisme d'actionnement des mâchoires à être fixé sur le couvercle 1, tous les autres éléments étant guidés par la glissière 7 (coulisseaux 6) ou solidaires de la glissière 7 (ensemble pignon 9/poignée 4, capot 5). La glissière 7 est maintenue en place sur le couvercle par les supports des organes de sécurité (guide de témoin de verrouillage, conduit d'échappement de soupape de régulation). Ce maintien est donc réalisé de manière particulièrement simple, sans recours à un quelconque soudage de la glissière sur le couvercle, ou encore à des perçages de trous pour des vis de fixation au travers de la paroi 10, qui posent des problèmes d'étanchéité.

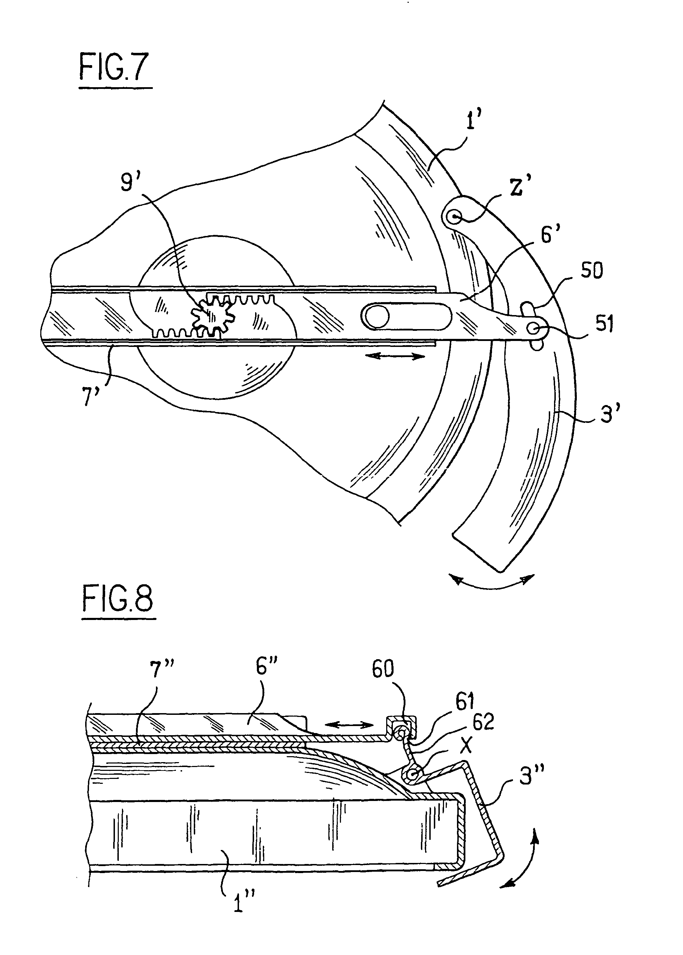

Selon un deuxième mode particulier de réalisation de l'invention illustré à la figure 7, les mâchoires 3' (ici représentées en position déverrouillée) sont ici articulées sur le couvercle 1' selon un axe Z' vertical en service (visible en bout sur la figure 7). Chaque mâchoire 3' comporte une lumière 50 dans laquelle un doigt 51 porté par le coulisseau 6' adjacent est engagé, de sorte qu'un coulissement du coulisseau 6' provoque une rotation de la mâchoire 3' associée.

Selon un troisième mode particulier de réalisation de l'invention illustré à la figure 8, les mâchoires 3" sont articulées sur le couvercle 1" selon un axe X horizontal en service (visible en bout sur la figure 8). Les coulisseaux 6" sont terminés par un logement 60 qui reçoit l'extrémité d'un doigt 62 solidaire de la mâchoire associée, de sorte qu'un coulissement du coulisseau 6" provoque une rotation de la mâchoire 3" associée. On notera que dans ce mode particulier de réalisation, et contrairement aux deux autres modes de réalisation illustrés, l'amenée des mâchoires en position verrouillée implique un coulissement des coulisseaux 6'' vers l'extérieur.

L'invention n'est pas limitée au mode particulier de réalisation qui vient d'être décrit, mais bien au contraire englobe toute variante entrant dans le cadre de l'invention tel que défini par les revendications.

En particulier, bien que l'on ait indiqué que les coulisseaux s'étendent dans une glissière rapportée, les coulisseaux pourront coulisser directement sur une partie de la paroi du couvercle, les coulisseaux étant alors guidés par des flancs formés soit dans la paroi du couvercle, soit dans le capot de protection du mécanisme d'actionnement des mâchoires. Le pignon pourra alors être monté à rotation soit sur la paroi du couvercle (à condition d'assurer une étanchéité adéquate entre ladite paroi et le pignon), soit sur le capot de protection.

Bien que l'on ait indiqué que le pignon est actionné par une poignée rotative reliée directement au pignon, on pourra prévoir tout autre mode d'actionnement du pignon, comme par exemple une poignée à déplacement radial reliée à une crémaillère coopérant avec le pignon, ou encore un levier à axe horizontal en service relié au pignon via des engrenages coniques.

Bien que l'on ait illustré le pignon comme étant denté sur toute sa périphérie, le pignon pourra ne comporter que des secteurs dentés d'extension angulaire suffisante pour permettre le déplacement des mâchoires entre la position de verrouillage et la position de déverrouillage.

Bien que l'on ait illustré le couvercle de l'invention comme comportant deux mâchoires, le couvercle pourra comporter plus de deux mâchoires. En particulier, le couvercle pourra comporter quatre mâchoires régulièrement espacées, les coulisseaux associés étant montés dans deux glissières s'étendant à angle droit l'une de l'autre. Chaque coulisseau pourra également être associé à une glissière spécifique, notamment lorsque les mâchoires sont en nombre impair. Les coulisseaux ne s'étendent pas forcément selon une direction radiale, du moment que leur coulissement provoque un mouvement de la mâchoire associée vers l'une de positions verrouillée ou déverrouillée.

## Revendications

1. Autocuiseur comprenant une cuve (2) et un couvercle (1) amovible comportant au moins deux mâchoires (3;3';3") montées mobiles sur le couvercle entre une position de verrouillage du couvercle sur la cuve et une position de déverrouillage, chaque mâchoire étant reliée à un coulisseau (6;6';6") monté coulissant sur le couvercle de sorte qu'un coulissement du coulisseau provoque un mouvement de la mâchoire associée vers l'une desdites positions, **caractérisé en ce qu'**un pignon (9;9') est monté tournant sur le couvercle selon un axe (Z) vertical en service, chaque coulisseau ayant une portion dentée (8) formant crémaillère qui coopère avec ledit pignon de sorte qu'une rotation du pignon provoque un mouvement simultané de toutes les mâchoires vers l'une desdites positions.

2. Autocuiseur selon la revendication 1, **caractérisé en ce qu'**au moins un coulisseau (6) s'étend dans une glissière (7) rapportée sur le couvercle.

3. Autocuiseur selon la revendication 2, **caractérisé en ce que** le couvercle comporte au moins deux organes de sécurité ayant des supports (13,19) s'étendant au travers du couvercle, les supports (13,19) étant agencés pour maintenir en position la glissière (7) contre le couvercle.

4. Autocuiseur selon la revendication 2, **caractérisé en ce que** le pignon (9) est monté pivotant sur un fond de la glissière (7).

5. Autocuiseur selon la revendication 4, **caractérisé en ce** le pignon (9) comporte un noyau (30) présentant des dents (31) et une partie circulaire (34) traversant un fond de la glissière (7), une rondelle (35) étant rapportée en extrémité de la partie circulaire (34) de sorte que le fond de la glissière (7) soit prisonnier entre les dents (31) et la rondelle (35).

6. Autocuiseur selon la revendication 1, **caractérisé en ce que** le pignon (9) est associé à une poignée de manoeuvre (4), le couvercle comportant un capot (5) recouvrant la glissière (7) duquel un téton (41) s'étend pour pénétrer dans une gorge annulaire (42) de la poignée de manoeuvre (4) qui s'étend selon un arc.

7. Autocuiseur selon la revendication 6, **caractérisé en ce que** le tenon est constitué par l'extrémité (41) d'une vis de fixation (40) du capot (5) à la glissière (7).

8. Autocuiseur selon la revendication 1, **caractérisé en ce que** le pignon (9) est associé à une poignée de manoeuvre (4) et **en ce que** le couvercle comprend un capot (5) recouvrant la glissière (7) et comportant un logement (46) pour un ressort (47) et une bille (48), la poignée (4) comportant deux empreintes (49) dans lesquelles la bille (48) pénètre sélectivement sous l'action du ressort (47) lorsque la bille est en regard d'une des empreintes.

9. Autocuiseur selon la revendication 8, **caractérisé en ce que** le logement (46) du ressort (47) et de la bille (48) est constitué par une portion d'un orifice de passage d'une vis de fixation (45) du capot (5) à la glissière (7).

10. Autocuiseur selon l'une des revendications précédentes, **caractérisé en ce que** chaque mâchoire (3) est reliée de façon rigide au coulisseau (6) associé de sorte que la mâchoire coulisse avec le coulisseau.

## Claims

1. A pressure cooker comprising a bowl (2) and a removable lid (1) carrying at least two jaws (3; 3'; 3") mounted to move on the lid between a locking position for locking the lid on the bowl and an unlocking position, each jaw being connected to a slider (6; 6'; 6") mounted to slide on the lid so that sliding of the slider causes the associated jaw to move towards one of said positions, the pressure cooker being **characterized in that** a pinion (9; 9') is mounted to turn on the lid about an axis (Z) that is vertical in operation, each slider having a rack-forming toothed portion (8) which co-operates with said pinion so that turning the pinion causes all of the jaws to move simultaneously towards one of said positions.

2. A pressure cooker according to claim 1, **characterized in that** at least one slider (6) extends in a slideway (7) fitted to the lid.

3. A pressure cooker according to claim 2, **characterized in that** the lid includes at least two safety members having supports (13, 19) extending through the lid, the supports (13, 19) being arranged so as to hold the slideway (7) in position against the lid.

4. A pressure cooker according to claim 2, **characterized in that** the pinion (9) is mounted to turn on a bottom of the slideway (7).

5. A pressure cooker according to claim 4, **characterized in that** the pinion (9) comprises a core (30) presenting teeth (31) and a circular portion (34) passing through the bottom of the slideway (7), a washer (35) being fitted to the end of the circular portion (34) so that the bottom of the slideway (7) is held captive between the teeth (31) and the washer (35).

6. A pressure cooker according to claim 1, **characterized in that** the pinion (9) is associated with a dive knob (4), the lid including a cover (5) covering the slideway (7) from which there extends a stud (41) for penetrating into an annular groove (42) in the drive knob (4), which groove occupies an arc.

7. A pressure cooker according to claim 6, **characterized in that** the stud is constituted by the end (41) of a fastener screw (40) for fastening the cover (5) to the slideway (7).

8. A pressure cooker according to claim 1, **characterized in that** the pinion (9) is associated with a drive knob (4) and **in that** the lid includes a cover (5) covering the slideway (7) and including a housing (46) for a spring (47) and a ball (48), the knob (4) including dimples (49) into which the ball (48) penetrates selectively under drive from the spring (47) when the ball is in register with one of the dimples.

9. A pressure cooker according to claim 8, **characterized in that** the housing (46) for the spring (47) and the ball (48) is constituted by a portion of an orifice for passing a fastener screw (45) for fastening the cover (5) to the slideway (7).

10. A pressure cooker according to any preceding claim, **characterized in that** each jaw (3) is connected rigidly to the associated slider (6) so that the jaw slides together with the slider.

## Patentansprüche

1. Schnellkochtopf, bestehend aus einem Behälter (2) und einem abnehmbaren Deckel (1), der mindestens zwei Spannbacken (3; 3'; 3") umfasst, die an dem Deckel zwischen einer Verriegelungsposition des Deckels an dem Behälter und einer Entriegelungsposition beweglich gelagert sind, wobei jede Spannbacke mit einem Schieber (6; 6'; 6") verbunden ist, der an dem Deckel derart verschiebbar gelagert ist, dass eine Verschiebung des Schiebers eine Bewegung der dazugehörigen Spannbacke in eine der genannten Positionen bewirkt, **dadurch gekennzeichnet, dass** ein Ritzel (9; 9') drehbar an dem Deckel um eine im Gebrauch vertikal verlaufende Achse (Z) gelagert ist, wobei jeder Schieber einen gezahnten Abschnitt (8) hat, der eine Zahnstange bildet, die mit dem genannten Ritzel derart zusammenwirkt, dass eine Drehung des Ritzels eine gleichzeitige Bewegung aller Spannbacken in eine der genannten Positionen bewirkt.

2. Schnellkochtopf nach Anspruch 1, **dadurch gekennzeichnet, dass** sich mindestens ein Schieber (6) in einer Gleitschiene (7) erstreckt, die an dem Deckel befestigt ist.

3. Schnellkochtopf nach Anspruch 2, **dadurch gekennzeichnet, dass** der Deckel mindestens zwei Sicherheitselemente umfasst, die Stützen (13, 19) aufweisen, die sich durch den Deckel erstrecken, wobei die Stützen (13, 19) derart ausgebildet sind, dass sie die Gleitschiene (7) in ihrer Position am Deckel halten.

4. Schnellkochtopf nach Anspruch 2, **dadurch gekennzeichnet, dass** das Ritzel (9) an einem Boden der Gleitschiene (7) drehbar gelagert ist.

5. Schnellkochtopf nach Anspruch 4, **dadurch gekennzeichnet, dass** das Ritzel (9) einen Kern (30) umfasst, der Zähne (31) aufweist, sowie einen kreisförmigen Abschnitt (34), der einen Boden der Gleitschiene (7) durchsetzt, wobei eine Scheibe (35) am Ende des kreisförmigen Abschnittes (34) derart befestigt ist, dass der Boden der Gleitschiene (7) zwischen den Zähnen (31) und der Scheibe (35) eingeschlossen ist.

6. Schnellkochtopf nach Anspruch 1, **dadurch gekennzeichnet, dass** das Ritzel (9) mit einem Bedienungsgriff (4) verbunden ist, wobei der Deckel eine Haube (5) umfasst, die die Gleitschiene (7) abdeckt, von der ein Stift (41) absteht, um in eine ringförmige Nut (42) des Bedienungsgriffes (4) einzudringen, die sich gemäß einem Bogen erstreckt.

7. Schnellkochtopf nach Anspruch 6, **dadurch gekennzeichnet, dass** der Stift von dem Ende (41) einer Befestigungsschraube (40) zur Befestigung der Haube (5) an der Gleitschiene (7) gebildet ist.

8. Schnellkochtopf nach Anspruch 1, **dadurch gekennzeichnet, dass** das Ritzel (9) mit einem Bedienungsgriff (4) verbunden ist und dass der Deckel eine Haube (5) umfasst, die die Gleitschiene (7) abdeckt und eine Aufnahme (46) für eine Feder (47) und eine Kugel (48) umfasst, wobei der Griff (4) zwei Vertiefungen (49) umfasst, in die die Kugel (48) unter der Wirkung der Feder (47) selektiv eindringt, wenn sich die Kugel gegenüber einer der Vertiefungen befindet.

9. Schnellkochtopf nach Anspruch 8, **dadurch gekennzeichnet, dass** die Aufnahme (46) für die Feder (47) und die Kugel (48) von einem Abschnitt einer Durchtrittsöffnung für eine Befestigungsschraube (45) zur Befestigung der Haube (5) an der Gleitschiene (7) gebildet ist.

10. Schnellkochtopf nach einem der vorhergehenden Ansprüche, **dadurch gekennzeichnet, dass** jede Spannbacke (3) auf starre Weise mit dem dazugehörigen Schieber (6) verbunden ist, derart, dass die Spannbacke mit dem Schieber gleitet.
